# EUROPEAN PATENT APPLICATION

(11) **EP 4 329 150 A1**
(43) Date of publication of application: **28.02.2024**
(21) Application number: 22811201.7
(22) Date of filing: 17.05.2022
(51) Int. Cl.: H02J 50/20, F24F 11/56, F24F 11/61, F24F 11/70, F24F 11/89, F24F 13/20, F24F 13/32, H02J 7/00, H02J 50/40, H02J 50/90, F24F 120/10

(54) **AIR CONDITIONING UNIT AND AIR CONDITIONING SYSTEM**

(30) Priority: 24.05.2021 JP 2021086908
(71) Applicant: Daikin Industries, Ltd., Osaka-shi, Osaka 530-0001 (JP)
(72) Inventor: NISHIMURA, Tadafumi, Osaka-shi, Osaka 530-8323 (JP); DOUMAE, Hiroshi, Osaka-shi, Osaka 530-8323 (JP); OKAMOTO, Tetsuya, Osaka-shi, Osaka 530-8323 (JP); HANADA, Takuya, Osaka-shi, Osaka 530-8323 (JP)
(74) Representative: Goddar, Heinz J.
(86) International application number: PCT/JP2022/020496
(87) International publication number: WO 2022/249928

(57) **Abstract**

An air conditioning unit (U) includes an indoor air conditioner (40) configured to condition air in a target space (S), and a power supply line (SL) configured to supply power to the indoor air conditioner (40), and a wireless power feeder (70) configured to feed power to a predetermined device (R) disposed in the target space (S). The wireless power feeder (70) acquires power from the power supply line (SL).

## Description

### TECHNICAL FIELD

The present disclosure relates to an air conditioning unit and an air conditioning system.

### BACKGROUND ART

Patent Document 1 discloses a wireless power feeder that wirelessly feeds power to a power reception sensor such as an alarm sensor, a motion sensor, and the like disposed in a target space such as a warehouse, a plant, and the like.

### CITATION LIST

### PATENT DOCUMENT

Patent Document 1: Japanese Unexamined Patent Publication No. 2014-193086

### SUMMARY OF THE INVENTION

### TECHNICAL PROBLEM

A space such as the ceiling cavity where communication equipment, an indoor air conditioner, and the like communicating with a power reception sensor are arranged is laid with a power cable, a communication cable, and the like that are connected to the communications equipment, the indoor air conditioner, and the like. If a wireless power feeder is installed in such a space, another cable for the wireless power feeder needs to be laid, leading to an increase in the number of cables to be laid. This makes a laying task complicated. As a result, the task of installing the wireless power feeder becomes difficult.

It is an object of the present disclosure to relatively easily install a wireless power feeder that feeds power to a device disposed in a target space.

### SOLUTION TO THE PROBLEM

A first aspect of the present disclosure is directed to an air conditioning unit including: an indoor air conditioner (40) configured to condition air in a target space (S); a power supply line (SL) configured to supply power to the indoor air conditioner (40); and a wireless power feeder (70) configured to feed power to a predetermined device (R) disposed in the target space (S). The wireless power feeder (70) acquires power from the power supply line (SL).

According to the first aspect, the wireless power feeder (70) acquires power from the power supply line (SL). This can eliminate the need for laying a power transmission cable that connects a commercial power source and the wireless power feeder (70) together.

A second aspect of the present disclosure is an embodiment of the first aspect. In the second aspect, the air conditioning unit further includes a control board (CB) configured to control the indoor air conditioner (40). The control board (CB) controls the wireless power feeder (70).

According to the second aspect, the control board (CB) can control power fed to the device (R) by the wireless power feeder (70).

A third aspect of the present disclosure is an embodiment of the first or second aspect. In the third aspect, the air conditioning unit further includes a control unit (CU) configured to control an intensity of radio waves sent from the wireless power feeder (70) to the device (R) at three or more levels in accordance with the number of persons present in the target space (S).

According to the third aspect, power can be fed to the predetermined device (R) with consideration of the influence of radio waves transmitted from the wireless power feeder (70) on the human body in accordance with the number of persons present in the target space (S).

A fourth aspect of the present disclosure is an embodiment of any one of the first to third aspects. In the fourth aspect, the air conditioning unit further includes a control unit (CU) configured to control feeding of power from the wireless power feeder (70) to the device (R) so that an index provided in consideration of influence of radio waves on a human body is less than or equal to a predetermined value.

According to the fourth aspect, the intensity of radio waves can be controlled to reduce the influence of radio waves transmitted from the wireless power feeder (70) on the human body.

A fifth aspect of the present disclosure is an embodiment of any one of the first to fourth aspects. In the fifth aspect, the device (R) is a first indoor air conditioner (40a) different from the indoor air conditioner (40), and the wireless power feeder (70) feeds power to the first indoor air conditioner (40a).

According to the fifth aspect, for example, if the first indoor air conditioner (40a) is an air conditioner that is not connected to the commercial power source, power can be fed from the air conditioning unit (U) to the first indoor air conditioner (40a). Thus, the first indoor air conditioner (40a) can be freely installed irrespective of the position of the commercial power source. Even if an additional first indoor air conditioner (40a) is installed, there is less increase in a power line that connects the commercial power source and the first indoor air conditioner (40a) together, and the labor for laying a power line can be omitted.

A sixth aspect of the present disclosure is an embodiment of any one of the first to fifth aspects. In the sixth aspect, the air conditioning unit further includes a communication unit (61) configured to transmit and receive predetermined information to and from the device (R).

According to the sixth aspect, power can be fed to the device (R), and the predetermined information can be transmitted and received to and from the device (R).

A seventh aspect of the present disclosure is an embodiment of the sixth aspect. In the seventh aspect, the communication unit (61) transmits and receives the predetermined information to and from a second indoor air conditioner (40b) different from the indoor air conditioner (40).

According to the seventh aspect, the communication unit (61) can exchange the predetermined information with the second indoor air conditioner (40b).

An eighth aspect of the present disclosure is an embodiment of the sixth or seventh aspect. In the eighth aspect, the communication unit (61) transmits and receives the predetermined information to and from an outdoor air conditioner (20), an air conditioning controller (C4) configured to control an air conditioning device (10) including the outdoor air conditioner (20) and the indoor air conditioner (40), or a management system configured to manage energy in a construction with the air conditioning device (10).

According to the eighth aspect, the communication unit (61) can transmit and receive the predetermined information to and from the outdoor air conditioner (20), the air conditioning controller (C4), or the management system.

A ninth aspect of the present disclosure is an embodiment of any one of the sixth to eighth aspects. In the ninth aspect, the communication unit (61) performs a second action in which information transmitted from the device (R) and relating to whether or not power can be fed is received in conjunction with a first action in which the air conditioning unit (U) feeds power to the device (R) or outputs a predetermined signal.

According to the ninth aspect, the second action in conjunction with the first action makes it possible to determine whether or not power can be fed to the device (R) and to understand the intensity of radio waves received by the device (R).

A tenth aspect of the present disclosure is an embodiment of the ninth aspect. In the tenth aspect, the air conditioning unit further includes a control unit (CU) configured to order an execution of a first mode in which the first and second actions are performed.

According to the tenth aspect, the execution of the first mode makes it possible to determine in advance whether power can be fed to the device (R). For example, if power cannot be fed to the device (R), or if the intensity of radio waves received is low, the position at which the device (R) is installed can be adjusted.

An eleventh aspect of the present disclosure is an embodiment of the tenth aspect. In the eleventh aspect, the first action is an action in which the air conditioning unit (U) feeds power to the device (R), and the control unit (CU) orders an execution of the first mode during a predetermined time zone.

According to the eleventh aspect, whether or not power can be fed to the device (R) can be determined during the predetermined time zone. If the predetermined time zone is night hours, the influence of radio waves sent from the wireless power feeder (70) on a person can be reduced.

A twelfth aspect of the present disclosure is an embodiment of the tenth aspect. In the twelfth aspect, the first action is an action in which the air conditioning unit (U) feeds power to the device (R), and the control unit (CU) orders an execution of the first mode when no person is present in the target space (S).

According to the twelfth aspect, the execution of the first mode in the absence of a person can lead to a reduction in the influence of radio waves sent from the wireless power feeder (70) on a person.

A thirteenth aspect of the present disclosure is an embodiment of the tenth aspect. In the thirteenth aspect, the first action is an action in which the air conditioning unit (U) feeds power to the device (R), and the control unit (CU) orders an execution of the first mode in accordance with a manual operation.

According to the thirteenth aspect, the first mode can be executed as needed.

A fourteenth aspect of the present disclosure is an embodiment of any one of the first to thirteenth aspects. In the fourteenth aspect, the wireless power feeder (70) includes a transmission member (71) configured to transmit power to the device (R); and a transmission circuit (72) connected to the power supply line (SL) to output power to the transmission member (71). The transmission member (71) and the transmission circuit (72) are provided at different positions.

According to the fourteenth aspect, the transmission member (71) and the transmission circuit (72) can be provided separately from each other. This leads to a higher degree of flexibility in installation of the transmission member (71) than if the transmission member (71) and the transmission circuit (72) are integrated together.

A fifteenth aspect of the present disclosure is an embodiment of the fourteenth aspect. In the fifteenth aspect, the indoor air conditioner (40) includes an inlet (46), an outlet (47), and a casing (41) having an air passage (48) through which air is transported from the inlet (46) to the outlet (47). The transmission member (71) is disposed in the air passage (48).

According to the fifteenth aspect, the transmission member (71) is disposed and thus air-cooled in the air passage (48). This can lead to less increase in the temperature of the transmission member (71) due to heat dissipation.

A sixteenth aspect of the present disclosure is an embodiment of the fifteenth aspect. In the sixteenth aspect, the air conditioning unit further includes a bell mouth (51) disposed in the air passage (48). The transmission member (71) is provided on the bell mouth (51).

According to the sixteenth aspect, the installation of the transmission member (71) on the bell mouth (51) lead to less increase in the temperature of the transmission member (71) due to heat dissipation.

A seventeenth aspect of the present disclosure is an embodiment of the sixteenth aspect. In the seventeenth aspect, the transmission member (71) is disposed on an installation surface (5 1c) of the bell mouth (51) in contact with the air passage (48), and has a shape conforming to a shape of the installation surface (5 1c).

According to the seventeenth aspect, the transmission member (71) shaped to conform to the shape of the surface of the bell mouth (51) in contact with the air passage (48) can lead to a reduction in the air resistance caused by the transmission member (71) in the air passage (48).

An eighteenth aspect of the present disclosure is an embodiment of the fifteenth aspect. In the eighteenth aspect, the air conditioning unit further includes a heat exchanger (53) disposed in the air passage (48) to exchange heat between air in the air passage (48) and a heating medium; and a drain pan (54) configured to collect drain water deposited on the heat exchanger (53). The transmission member (71) is provided on the drain pan (54).

According to the eighteenth aspect, the drain pan (54) is disposed in a relatively large space, and thus the transmission member (71) can be installed in a relatively easy way. The installation of the transmission member (71) in such a relatively large space can lead to a less increase in the temperature of the transmission member (71) due to heat dissipation.

A nineteenth aspect of the present disclosure is an embodiment of the fifteenth aspect. In the nineteenth aspect, the air conditioning unit further includes a support (27) configured to support the casing (41) on a structure of a construction. The transmission member (71) is provided on the support (27).

According to the nineteenth aspect, the transmission member (71) can be installed on the support (27).

A twentieth aspect of the present disclosure is an embodiment of the fifteenth aspect. In the twentieth aspect, the casing (41) is disposed at an opening (63a) in a ceiling of the target space (S). The air conditioning unit further includes a decorative panel (43) provided on a lower surface of the casing (41) to cover the opening (63a). The transmission member (71) is disposed on the decorative panel (43).

According to the twentieth aspect, the transmission member (71) can be disposed on the decorative panel (43).

A twenty-first aspect of the present disclosure is an embodiment of the twentieth aspect. In the twenty-first aspect, if a surface of the decorative panel (43) facing a ceiling cavity is defined as a first surface (64), the transmission member (71) is provided on an outer peripheral portion (68) of the first surface (64).

According to the twenty-first aspect, the transmission member (71) can be disposed at the outer periphery of the surface of the decorative panel (43) facing the ceiling cavity.

A twenty-second aspect of the present disclosure is an embodiment of the twenty-first aspect. In the twenty-second aspect, the decorative panel (43) is rectangular, and the transmission member (71) is disposed on one of corner portions (66) of the outer peripheral portion (68) of the first surface (64), each corner portion (66) being surrounded by two adjacent ones of sides of the outer peripheral portion (68).

According to the twenty-second aspect, the transmission member (71) can be disposed on the one of the corner portions (66) of the decorative panel (43).

A twenty-third aspect of the present disclosure is an embodiment of the twenty-first aspect. In the twenty-third aspect, the decorative panel (43) is rectangular, and the transmission member (71) is disposed on a straight portion (67) of the outer peripheral portion (68) of the first surface (64) where the straight portion (67) is along any one of four sides of the outer peripheral portion (68).

According to the twenty-third aspect, the transmission member (71) can be disposed along the straight portion (67) of the outer periphery of the first surface (64).

A twenty-fourth aspect of the present disclosure is an embodiment of the twentieth aspect. In the twenty-fourth aspect, if a surface of the decorative panel (43) facing the target space (S) is defined as a second surface (65), the transmission member (71) is provided on the second surface (65).

According to the twenty-fourth aspect, the transmission member (71) can be disposed on the surface of the decorative panel (43) facing the target space (S).

A twenty-fifth aspect of the present disclosure is an embodiment of the fourteenth aspect. In the twenty-fifth aspect, the indoor air conditioner (40) further includes a duct (94) disposed behind a ceiling of the target space (S). The transmission member (71) is located closer to a ceiling back surface between the ceiling back surface and the duct (94).

According to the twenty-fourth aspect, the transmission member (71) is positioned closer to the ceiling back surface. Thus, the transmission member (71) is less affected by heat received from the duct (94) even if the duct (94) is heated by the air flowing through the duct (94).

A twenty-sixth aspect of the present disclosure is an embodiment of any one of the fourteenth to twenty-fifth aspects. In the twenty-sixth aspect, the transmission member (71) includes a body part (71a) and a cover part (71b) that is hollow and made of resin. The body part (71a) is disposed inside the cover part (71b).

According to the twenty-sixth aspect, the transmission member (71) includes the body part (71a) and the cover part made of resin, which are integrated together.

A twenty-seventh aspect of the present disclosure is directed to an air conditioning system. The air conditioning system includes the air conditioning unit of any one of the ninth to thirteenth aspects including a plurality of air conditioning units disposed in the target space (S), and a control device (C1, C2, C3, C4) configured so that the plurality of air conditioning units perform the second action in conjunction with the first action for the device (R) such that the control device (C1, C2, C3, C4) determines near which one of the air conditioning units the device (R) is located.

According to the twenty-seventh aspect, it is possible through the first and second actions to determine near which one of the air conditioning units (U) the predetermined device (R) is located.

### BRIEF DESCRIPTION OF THE DRAWINGS

FIG. 1 is a schematic view illustrating the interior of an indoor space where an air conditioning unit and predetermined devices according to an embodiment are arranged.
FIG. 2 is a piping system diagram of an air conditioning device according to an embodiment.
FIG. 3 is a vertical sectional view of an internal structure of an indoor air conditioner according to an embodiment.
FIG. 4 is a three-dimensional perspective view of the indoor air conditioner.
FIG. 5 is a schematic diagram illustrating connection between various devices in the indoor air conditioner and power lines.
FIG. 6 is a schematic diagram illustrating a configuration of a wireless power feeder according to an embodiment.
FIG. 7 is a schematic view illustrating an antenna for the wireless power feeder. FIG. 7(a) illustrates an antenna element and a cover part. FIG. 7(b) illustrates the position to which the antenna is attached.
FIG. 8 is a block diagram illustrating a control device and devices connected to the control device via communication lines.
FIG. 9 is a block diagram illustrating an indoor control board and devices connected to the indoor control board via communication lines.
FIG. 10 is a flowchart showing how a normal operating mode of an air conditioning unit is controlled.
FIG. 11 is a flowchart showing how a trial operating mode of the air conditioning unit is controlled.
FIG. 12 corresponds to FIG. 5 and illustrates an indoor air conditioner to which an air conditioning unit according to a third variation feeds power.
FIG. 13 corresponds to FIG. 5 and illustrates an indoor air conditioner to which an air conditioning unit according to a fourth variation feeds power.
FIG. 14 is a schematic diagram illustrating a configuration of an air conditioning unit according to a sixth variation.
FIG. 15 is a schematic diagram illustrating a configuration of an air conditioning system according to a second embodiment.
FIG. 16 is a schematic diagram of the interior of an indoor space in which the air conditioning system is used.
FIG. 17 is a block diagram illustrating an outdoor control board of an air conditioning system and part of devices connected to the outdoor control board via communication lines.
FIG. 18 is a flowchart showing how the air conditioning system is controlled.
FIG. 19 is a three-dimensional perspective view of an indoor air conditioner according to another embodiment.
FIG. 20 corresponds to FIG. 5 and illustrates an air conditioning unit according to another embodiment.
FIG. 21 corresponds to FIG. 5 and illustrates an air conditioning unit according to another embodiment.
FIG. 22 corresponds to FIG. 17 and illustrates an air conditioning system according to another embodiment.

### DESCRIPTION OF EMBODIMENTS

Embodiments of the present invention will be described in detail below with reference to the drawings. The following embodiments are merely exemplary ones in nature, and are not intended to limit the scope, application, or uses of the invention. Features of the embodiments, variations, and other examples described below can be combined or partially substituted within the range where the present invention can be embodied.

### <<First Embodiment>>

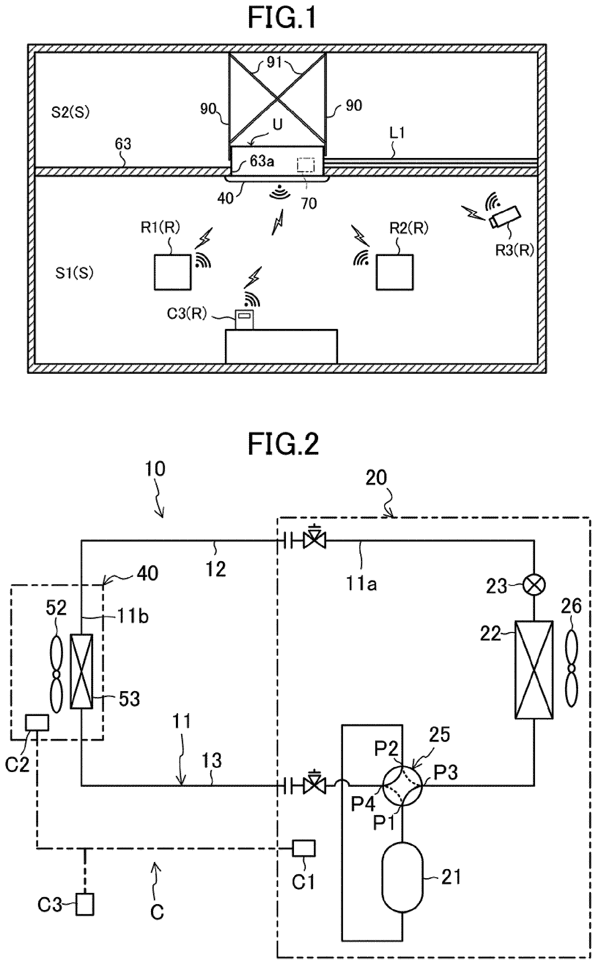

As illustrated in FIG. 1, an air conditioning unit (U) of this example is disposed in an indoor space (S). The indoor space (S) is a target space (S) of the present disclosure. The indoor space (S) is, for example, an interior space of a building, a hotel, a hospital, an airport, a warehouse, a factory, or any other facility.

The indoor space (S) includes a first space (S 1) and a second space (S2). The first space (S 1) is a space defined by the floor, walls, and the ceiling. The second space (S2) is a space formed in the ceiling cavity. The second space (S2) may be a space formed behind a wall or under the floor.

The air conditioning unit (U) includes an indoor air conditioner (40), a wireless power feeder (70), and a power supply line (SL). The indoor air conditioner (40) forms part of an air conditioning device (10) to be described later. The air conditioning unit (U) conditions air in the first space (S 1). The air conditioning unit (U) is connected to a first power line (L1). Power is supplied from a commercial power source through the first power line (L1) to the air conditioning unit (U). The wireless power feeder (70) and the power supply line (SL) will be described in detail later.

The air conditioning unit (U) feeds power to predetermined devices (R) arranged in the first space (S 1) in a wireless manner. Examples of the predetermined devices (R) include an alarm sensor (R1), a CO₂ sensor (R2), a remote controller (C3), and a camera (R3). In the following description, these devices (R) are collectively referred to as the "power receivers (R)."

Power is fed to the power receivers (R) by radio waves sent from the wireless power feeder (70) of the air conditioning unit (U). Specifically, the power receivers (R) each include a power receiving device (not shown) configured to receive radio waves from the wireless power feeder (70), and a battery (not shown) configured to store electricity fed via the power receiving device. Accordingly, power is fed to the power receivers (R) by radio waves from the wireless power feeder (70). Power may be fed only from the wireless power feeder (70) to the power receivers (R), or may be fed from both of the wireless power feeder (70) and the commercial power source to the power receivers (R).

The power receivers (R) transmit and receive predetermined information to and from the air conditioning unit (U). For example, the alarm sensor (R1) detects the presence of a person or persons in the first space (S1) to transmit a signal to the air conditioning unit (U). The CO₂ sensor (R2) detects the CO₂ concentration in the first space (S1) to transmit a signal to the air conditioning unit (U). The remote controller (C3) transmits, according to a user's operation, an on/off signal or a signal indicating an instruction to change the operating mode to the air conditioning unit (U), and receives the predetermined information from the air conditioning unit (U). The remote controller (C3) is portable. The camera (R3) detects the number of persons in the first space (S1) to transmit a signal to the air conditioning unit (U).

### -General Configuration of Air Conditioner-

As illustrated in FIG. 2, the air conditioning device (10) includes an outdoor air conditioner (20), the indoor air conditioner (40), a liquid connection pipe (12), and a gas connection pipe (13). The outdoor air conditioner (20) and the indoor air conditioner (40) are connected together through the liquid connection pipe (12) and the gas connection pipe (13). These components are connected together to form a refrigerant circuit (11). Specifically, the refrigerant circuit (11) includes a heat-source-side circuit (11a) provided in the outdoor air conditioner (20), and a utilization-side circuit (11b) provided in the indoor air conditioner (40). These circuits are connected together by the liquid connection pipe (12) and the gas connection pipe (13).

The refrigerant circuit (11) is filled with refrigerant. The refrigerant in this example is difluoromethane. The refrigerant circuit (11) performs a vapor compression refrigeration cycle. The refrigerant circuit (11) includes, as main components, a compressor (21), an outdoor heat exchanger (22), an expansion valve (23), an indoor heat exchanger (53), and a four-way switching valve (25).

### <Outdoor Air Conditioner>

The outdoor air conditioner (20) is installed outdoors. As illustrated in FIG. 2, the outdoor air conditioner (20) includes the compressor (21), the outdoor heat exchanger (22), the outdoor fan (26), the expansion valve (23), the four-way switching valve (25), and an outdoor control board (C1). The outdoor control board (C1) will be described in detail later.

The compressor (21) sucks and compresses a low-pressure gas refrigerant. The compressor (21) discharges the compressed refrigerant. The compressor (21) is a variable capacity compressor in which power is supplied from an inverter circuit to an electric motor. In other words, the compressor (21) is configured to be capable of regulating the operation frequency (the number of rotations) of the electric motor.

The outdoor heat exchanger (22) exchanges heat between outdoor air transported by the outdoor fan (26) and the refrigerant. The outdoor fan (26) transports outdoor air passing through the outdoor heat exchanger (22).

The expansion valve (23) decompresses the refrigerant. The expansion valve (23) is an electric expansion valve having a variable opening degree. The expansion valve (23) only has to be be connected to the liquid connection pipe (12) of the refrigerant circuit (11), and may be provided in the indoor air conditioner (40).

The four-way switching valve (25) has a first port (P1), a second port (P2), a third port (P3), and a fourth port (P4). The first port (P1) is connected to a discharge portion of the compressor (21). The second port (P2) is connected to a suction portion of the compressor (21). The third port (P3) is connected to the gas end of the outdoor heat exchanger (22). The fourth port (P4) is connected to the gas connection pipe (13).

The four-way switching valve (25) switches between a first state (the state indicated by the solid curves in FIG. 2) and a second state (the state indicated by the broken curves in FIG. 2). In the first state, the first port (P1) and the third port (P3) communicate with each other, and the second port (P2) and the fourth port (P4) communicate with each other. In the second state, the first port (P1) and the fourth port (P4) communicate with each other, and the second port (P2) and the third port (P3) communicate with each other.

The refrigerant circuit (11) performs a first refrigeration cycle and a second refrigeration cycle according to switching of the four-way switching valve (25). In the first refrigeration cycle, the indoor heat exchanger (53) serves as an evaporator, and the outdoor heat exchanger (22) serves as a radiator. In the second refrigeration cycle, the indoor heat exchanger (53) serves as a radiator, and the outdoor heat exchanger (22) serves as an evaporator.

### <Indoor Air Conditioner>

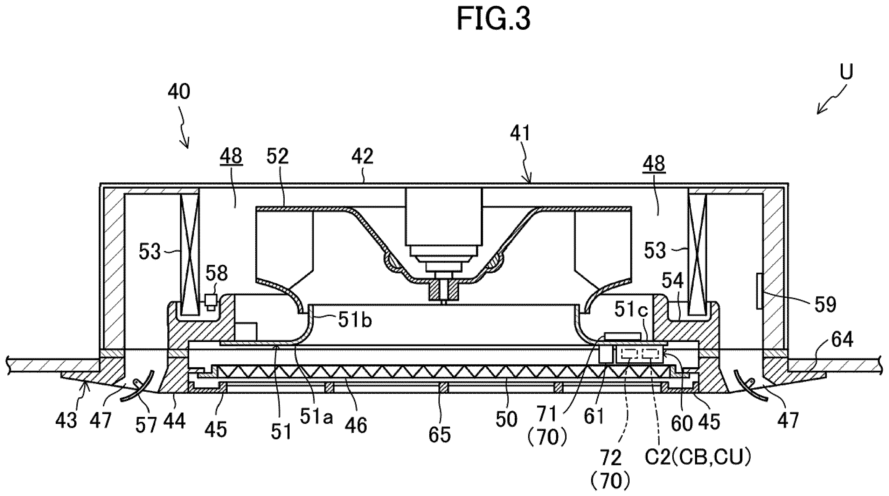

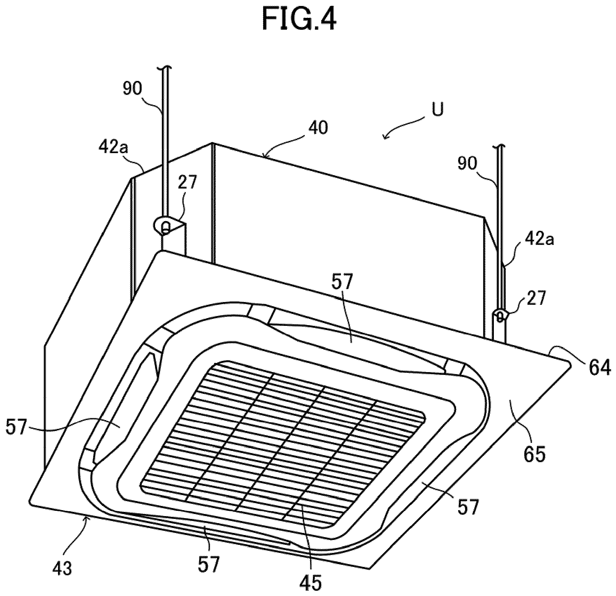

As illustrated in FIGS. 3 and 4, the indoor air conditioner (40) is a ceiling embedded air conditioner. The indoor air conditioner (40) includes a casing (41), a filter (50), a bell mouth (51), an indoor fan (52), the indoor heat exchanger (53), a drain pan (54), an indoor control board (C2), the power supply line (SL), and the wireless power feeder (70).

### -Casing-

The casing (41) is disposed at an opening (63a) in the ceiling of the indoor space (S) (see FIG. 1). Specifically, the casing (41) includes a casing body (42) and a decorative panel (43).

The casing body (42) has a plurality of sidewalls, which form an octagon with four short sides and four long sides alternately connected together in plan view. The casing body (42) has an opening construction with downward. The casing body (42) is disposed in the second space (S2) via the opening (63a) in the ceiling. Among the sidewalls of the casing body (42), four shorter sidewalls (42a) including the short sides are each provided with a support (27).

The supports (27) are each a member for fixing the casing (41) to a structure of a construction. The structure of the construction is a hanging tool (90) configured as a metal rod that extends in the top-to-bottom direction in the second space (S2). The supports (27) are configured as L-shaped metal pieces. Each support (27) is fixed by the associated hanging tool (90) and a fastening member such as a nut. Thus, the casing body (42) is held in the second space (S2). The hanging tools (90) are fixed together by coupling members (91). The coupling members (91) are metal members provided for vibration isolation or the like.

The decorative panel (43) is removably provided on the open surface of the casing body (42). The decorative panel (43) covers the opening (63a) of the ceiling surface while being attached to the casing body (42). The decorative panel (43) includes a panel body (44) in the shape of a rectangular frame in plan view, and a suction grille (45) provided at the center of the panel body (44). A single inlet (46) is formed in the center of the panel body (44). The suction grille (45) is attached to the inlet (46). Four side edge portions of the panel body (44) each have an outlet (47). The outlets (47) extend along the respective side edge portions.

Four corner portions of the decorative panel (43) each have an auxiliary outlet continuous with associated one of the outlets (47). Each outlet (47) is provided with a flap (57). The flaps (57) open and close the associated outlets (47). Each of the flaps (57) is formed in the shape of a long plate extending along the longitudinal direction of the outlet (47). The vertical section of the flap (57) is substantially arc-shaped. The casing (41) includes therein an air passage (48) from the inlet (46) to the outlets (47). The surface of the decorative panel (43) facing the ceiling cavity is defined as the first surface (64) of the present disclosure, and the surface of the decorative panel (43) facing the indoor space is defined as the second surface (65) of the present disclosure.

### -Filter-

The filter (50) is disposed above the suction grille (45). The filter (50) is disposed upstream of the indoor heat exchanger (53) in the air passage (48). The filter (50) catches dust in intake air that is sucked through the inlet (46).

### -Bell Mouth-

The bell mouth (51) is disposed in the air passage (48). Specifically, the bell mouth (51) is disposed above the filter (50). The bell mouth (51) straightens the intake air. The bell mouth (51) includes a frame portion (51a) and a cylindrical portion (51b). The frame portion (51a) is formed in a flat circular shape. Specifically, the frame portion (51a) has an inner frame and an outer frame each formed in a circular shape. The inner frame of the frame portion (51b) is connected to the lower end of the cylindrical portion (51b).

### -Indoor Fan-

The indoor fan (52) is disposed above the bell mouth (51). The indoor fan (52) is a centrifugal fan. The axis of the indoor fan (52) is aligned with the cylinder axis of the cylindrical portion (51b) of the bell mouth (51). The indoor fan (52) is disposed upstream of the indoor heat exchanger (53) in the air passage (48). The indoor fan (52) transports air passing through the indoor heat exchanger (53). The indoor fan (52) transports air sucked from the bell mouth (51) radially outward.

### -Indoor Heat Exchanger-

The indoor heat exchanger (53) is disposed around the indoor fan (52). The indoor heat exchanger (53) is bent along the four side surfaces of the casing body (42). The indoor heat exchanger (53) corresponds to a utilization heat exchanger. The indoor heat exchanger (53) exchanges heat between the air transported by the indoor fan (52) and the refrigerant. The indoor heat exchanger (53) is the heat exchanger (53) of the present disclosure.

### -Drain Pan-

The drain pan (54) is disposed below the indoor heat exchanger (53). The drain pan (54) receives condensation water generated in the casing (41) of the indoor air conditioner (40). The indoor air conditioner (40) includes a drain pump (58) and a drain pipe (not shown). The drain pump (58) discharges water in the drain pan (54) through the drain pipe to the outside of the casing (41).

### -Indoor Control Board-

The indoor control board (C2) is a control board (CB) of the present disclosure. The indoor control board (C2) is also a control unit (CU) of the present disclosure. The indoor control board (C2) is housed in an electric component box (60). The electric component box (60) is disposed in the casing (41). Specifically, the electric component box (60) is disposed below the frame portion (51a) of the bell mouth (51).

### -First Communication Device-

The indoor air conditioner (40) includes a first communication device (61). The first communication device (61) is a communication unit (61) of the present disclosure. The first communication device (61) transmits and receives predetermined information to and from the power receivers (R) in the indoor space (S). Examples of the predetermined information include information on the number of persons detected by the camera (R3), a CO₂ value detected by the CO₂ sensor (R2), and information relating to whether or not power can be fed to the power receivers (R). The information on whether or not power can be fed will be described later.

### -Power Supply Line-

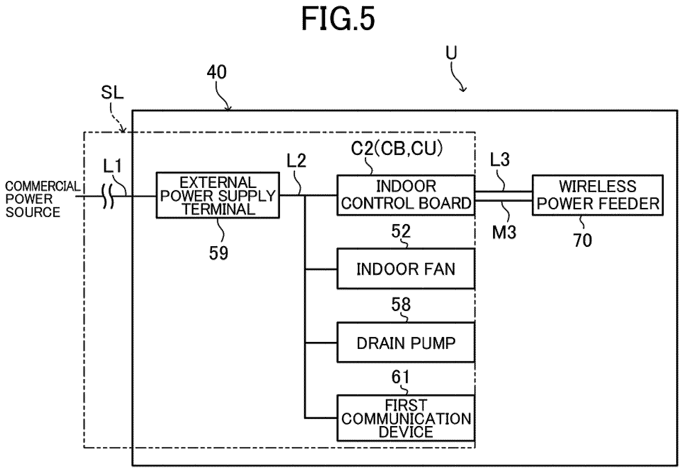

As shown in FIG. 5, the power supply line (SL) is a line through which power is supplied to the wireless power feeder (70). Specifically, the power supply line (SL) includes the first power line (L1) and a second power line (L2). The first power line (L1) provides connection between the commercial power source and an external power supply terminal (59) disposed in the indoor air conditioner (40). The second power line (L2) provides connection between the external power supply terminal (59) and various devices such as the indoor fan (52), the drain pump (58), the first communication device (61), and the indoor control board (C2), arranged in the indoor air conditioner (40), except the wireless power feeder (70). The power supply line (SL) also includes the external power supply terminal (59), the indoor fan (52), the drain pump (58), the first communication device (61), and the indoor control board (C2), which are connected to the second power line (L2).

### -Wireless Power Feeder-

The wireless power feeder (70) is a space-transmission wireless power transmitter configured to transmit power to the power receivers (R) apart from the wireless power feeder (70) in the indoor space (S) by transmission of radio waves.

The wireless power feeder (70) is connected to the indoor control board (C2) forming part of the power supply line (SL) through a third power line (L3) (see FIG. 5). Accordingly, power is supplied to the wireless power feeder (70) via the indoor control board (C2).

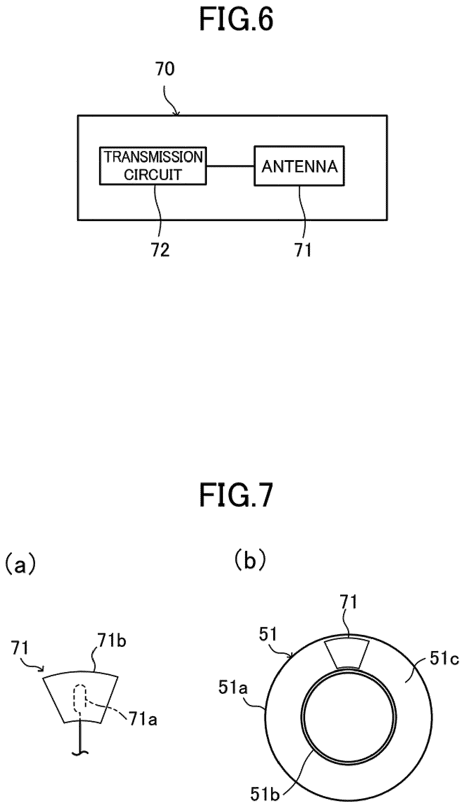

As shown in FIGS. 6 and 7, the wireless power feeder (70) includes a transmission circuit (72) and an antenna (71). The transmission circuit (72) and the antenna (71) are connected together through a wire. The transmission circuit (72) is disposed in the electric component box (60) (see FIG. 3). In the transmission circuit (72), the intensity of radio waves to be output to the antenna (71) is controlled based on at least one of the frequency of the radio waves or power.

The antenna (71) is a transmission member (71) of the present disclosure. The antenna (71) sends power-feeding radio waves output from the transmission circuit (72). The power receivers (R) receive radio waves sent from the antenna (71) to allow power to be fed thereto. The antenna (71) is provided at a position different from that of the transmission circuit (72). Specifically, the antenna (71) is disposed in the air passage (48). More specifically, the antenna (71) is provided on an upper surface (51c) of the frame portion (51a) of the bell mouth (51). The upper surface of the frame portion (51a) is an installation surface (51c) of the present disclosure.

The antenna (71) includes an antenna element (71a) and a cover part (71b). The antenna element (71a) is a body part (71a) of the present disclosure. The antenna element (71a) is configured as a metal wire. The cover part (71b) is a hollow member made of resin. The antenna element (71a) is disposed inside the cover part (71b) so as to be integrated with the cover part (71b). The cover part (71b) is shaped to conform to the upper surface (51c) of the frame portion (51a) of the bell mouth (51). Specifically, the upper surface (51c) of the frame portion (51a) is ring-shaped as viewed from above. Thus, the cover part (71b) is arc-shaped as viewed from above. The cover part (71b) has a flat shape.

### -First Control Device-

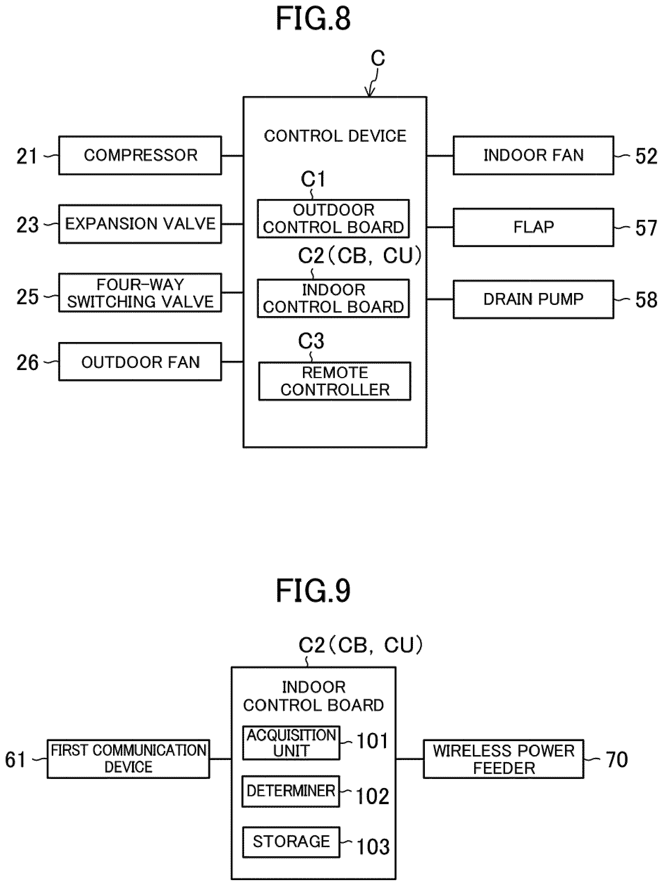

As shown in FIG. 8, the air conditioner (10) includes a first control device (C). The first control device (C) controls the refrigerant circuit (11). The first control device (C) controls the indoor air conditioner (40) and the outdoor air conditioner (20). The first control device (C) includes the outdoor control board (C1), the indoor control board (C2), and a remote controller (C3).

Each of the outdoor control board (C1), the indoor control board (C2), and the remote controller (C3) includes a microcomputer and a memory device that stores software for operating the microcomputer.

The first control device (C) includes a plurality of first communication lines. The outdoor control board (C1), the indoor control board (C2), and the remote controller (C3) exchange signals with one another via these first communication lines. The first communication lines are wired. The first communication lines may be wireless.

The first control device (C) includes a plurality of second communication lines connected to the compressor (21), the expansion valve (23), the four-way switching valve (25), the outdoor fan (26), the indoor fan (52), the drain pump (58), and the first communication device (61).

The first control device (C) outputs a control signal to at least the compressor (21), the expansion valve (23), the four-way switching valve (25), the outdoor fan (26), the indoor fan (52), the drain pump (58), and the transmission circuit (72).

As shown in FIGS. 5 and 9, the indoor control board (C2) is connected to the transmission circuit (72) through a third communication line (M3). The indoor control board (C2) controls the wireless power feeder (70) via the third communication line (M3). Specifically, the indoor control board (C2) controls sending of radio waves from the wireless power feeder (70) or suspension of the sending, and also controls the intensity of the radio waves sent from the wireless power feeder (70), based on information received from the first communication device (61).

The indoor control board (C2) includes an acquisition unit (101), a determiner (102), and a storage (103). The acquisition unit (101) acquires, for example, information transmitted from the first communication device (61) and relating to whether or not power can be fed to each power receiver (R). Examples of the information relating to whether or not power can be fed include information on whether or not power can be fed to the power receiver (R) and the intensity of radio waves to be received by the power receiver (R). The determiner (102) determines whether or not power can be fed to each power receiver (R), and determines the intensity of radio waves to be received by the power receiver (R), for example, based on the information acquired by the acquisition unit (101) and relating to whether or not power can be fed to the power receiver (R). The storage (103) stores the result of the determination made by the determiner (102). An action for the determination made by the indoor control board (C2) will be described later.

### -Operation-

Operation of the air conditioner (10) will be described. The air conditioner (10) performs a cooling operation and a heating operation.

In the cooling operation, the first control device (C) operates the compressor (21), the indoor fan (52), and the outdoor fan (26). The first control device (C) sets the four-way switching valve (25) to the first state. The first control device (C) appropriately adjusts the opening degree of the expansion valve (23). In the cooling operation, the first refrigeration cycle is performed in which the refrigerant compressed by the compressor (21) dissipates heat in the outdoor heat exchanger (22) and evaporates in the indoor heat exchanger (53).

In the cooling operation, the refrigerant compressed by the compressor (21) passes through the four-way switching valve (25) and flows through the outdoor heat exchanger (22). In the outdoor heat exchanger (22), the refrigerant dissipates heat to the outdoor air and then condenses. The refrigerant that has dissipated heat in the outdoor heat exchanger (22) is decompressed by the expansion valve (23), and then flows through the indoor heat exchanger (53). In the indoor heat exchanger (53), the refrigerant absorbs heat from indoor air and then evaporates. The air cooled by the indoor heat exchanger (53) is supplied to the indoor space through the outlets (47). The refrigerant that has evaporated in the indoor heat exchanger (53) is sucked into the compressor (21), and is then compressed again.

In the heating operation, the first control device (C) operates the compressor (21), the indoor fan (52), and the outdoor fan (26). The first control device (C) sets the four-way switching valve (25) to the second state. The first control device (C) appropriately adjusts the opening degree of the expansion valve (23). In the heating operation, the second refrigeration cycle is performed in which the refrigerant compressed by the compressor (21) dissipates heat in the indoor heat exchanger (53) and evaporates in the outdoor heat exchanger (22).

In the heating operation, the refrigerant compressed by the compressor (21) passes through the four-way switching valve (25) and flows through the indoor heat exchanger (53). In the indoor heat exchanger (53), the refrigerant dissipates heat to the indoor air and then condenses. The air heated by the indoor heat exchanger (53) is supplied to the indoor space through the outlets (47). The refrigerant that has dissipated heat in the indoor heat exchanger (53) is decompressed by the expansion valve (23), and then flows through the outdoor heat exchanger (22). In the outdoor heat exchanger (22), the refrigerant absorbs heat from the outdoor air and then evaporates. The refrigerant that has evaporated in the outdoor heat exchanger (22) is sucked into the compressor (21), and is then compressed again.

### -Action of Air Conditioning Unit-

An action of the air conditioning unit (U) will be described. The action of the air conditioning unit (U) includes a first action and a second action.

The first action is an action in which the air conditioning unit (U) supplies power to the power receivers (R). Specifically, in the first action, the wireless power feeder (70) sends radio waves from the antenna (71), where the radio waves have been adjusted by the indoor control board (C2) to have a predetermined frequency and a predetermined power. Specifically, the indoor control board (C2) controls the intensity of the radio waves at three or more levels in accordance with the number of persons present in the indoor space (S). The indoor control board (C2) controls feeding of power from the wireless power feeder (70) to the power receivers (R) so that an index provided in consideration of the influence of radio waves sent from the wireless power feeder (70) on the human body is less than or equal to a predetermined value. Here, the index provided in consideration of the influence of the radio waves on the human body means, for example, an index based on at least one of a value based on the relation between the electric field intensity and the frequency, the average electric field intensity during a predetermined time, or the electric field intensity during a time less than the predetermined time. When the index provided in consideration of the influence of the radio waves on the human body is controlled to a value less than or equal to the predetermined value, power can be fed to the power receivers (R) while the influence of the radio waves on the human body can be reduced even with a person present in the indoor space (S).

The second action is an action in which the air conditioning unit (U) acquires the information transmitted from the power receivers (R) and relating to whether or not power can be fed in conjunction with the first action. Specifically, in the second action, the first communication device (61) acquires the information relating to whether or not power can be fed, after the first action has been executed.

### -Power Feeding Mode-

The power feeding mode includes a normal operating mode and a trial operating mode. The normal operating mode is a mode in which power is fed from the air conditioning unit (U) to the power receivers (R). The trial operating mode is a mode in which the air conditioning unit (U) acquires information relating to whether or not power can be fed to the power receivers (R). The trial operating mode is performed, for example, if the air conditioning unit (U) or the power receivers (R) are newly installed in the indoor space (S), or if the air conditioning unit (U) or the power receivers (R) is in maintenance. Each of the operating modes will be described below.

### -Control of Normal Operating Mode-

In the normal operating mode, the first action is executed. In the normal operating mode, the power receivers (R) receive radio waves transmitted from the wireless power feeder (70), and a battery provided in each power receiver (R) can be charged.

The indoor control board (C2) controls feeding of power from the wireless power feeder (70) to the power receivers (R) so that the cumulative time of feeding of power within a predetermined period is less than or equal to a predetermined time. For example, if the predetermined period is 24 hours, the wireless power feeder (70) is controlled to feed power intermittently or continuously so that the cumulative time of feeding of power within 24 hours is less than or equal to a fixed time.

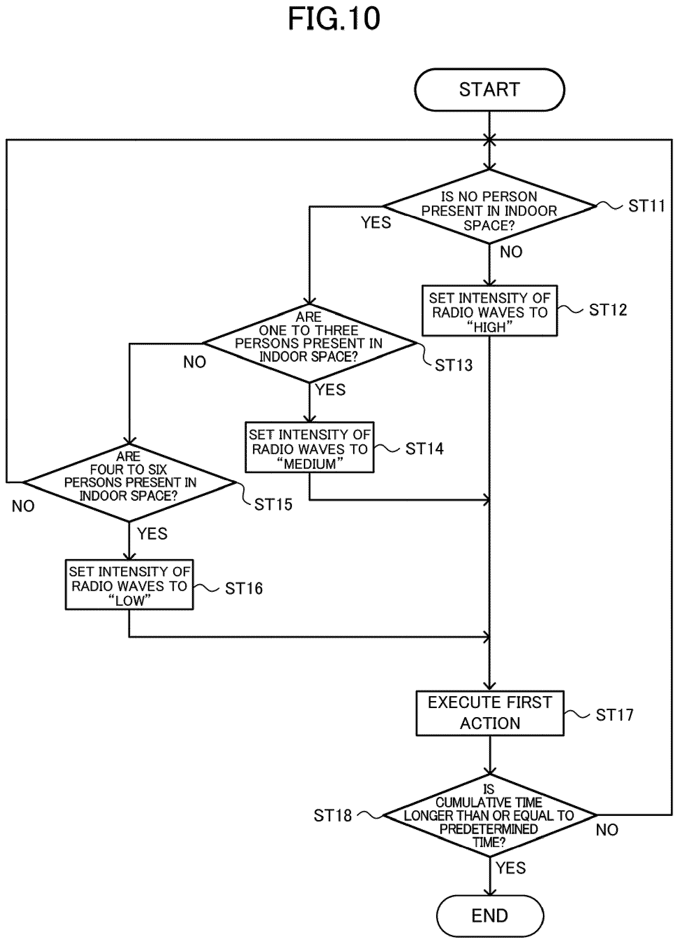

Next, an example of control in the normal operating mode will be described with reference to FIG. 10. In the following description, the indoor control board (C2) controls the intensity of radio waves transmitted from the wireless power feeder (70) at four levels: "high," "medium," "low," and "zero". If no person is present in the indoor space (S), the indoor control board (C2) sets the intensity of the radio waves to "high." If one to three persons are present in the indoor space (S), the indoor control board (C2) sets the intensity of the radio waves to "medium." If four to six persons are present in the indoor space (S), the indoor control board (C2) sets the intensity of the radio waves to "low." If seven or more persons are present in the indoor space (S), the indoor control board (C2) sets the intensity of the radio waves from the wireless power feeder (70) to "zero." In other words, the wireless power feeder (70) does not transmit radio waves.

In step ST11, the indoor control board (C2) determines whether or not one or more persons are present in the indoor space (S). If it is determined that no person is present in the indoor space (S) ("NO" in step ST11), step ST12 is executed. If it is determined that one or more persons are present in the indoor space (S) ("YES" in step ST11), step ST13 is executed.

In step ST12, the indoor control board (C2) sets the intensity of radio waves from the wireless power feeder (70) to "high."

In step ST13, the indoor control board (C2) determines whether or not the number of persons in the indoor space (S) is one to three. If it is determined that the number of persons is one to three ("YES" in step ST13), step ST14 is executed. If it is determined that the number of persons is not one to three ("NO" in step ST13), step ST15 is executed.

In step ST14, the indoor control board (C2) sets the intensity of radio waves from the wireless power feeder (70) to "medium."

In step ST15, it is determined whether or not the number of persons is four to six. If it is determined that the number of persons is four to six ("YES" in step ST15), step ST16 is executed. If it is determined that the number of persons is not four to six ("NO" in step ST 15), the number of persons is seven or more. In this case, the wireless power feeder (70) does not transmit radio waves, and step ST11 is executed again.

In step ST16, the indoor control board (C2) sets the intensity of radio waves from the wireless power feeder (70) to "low."

In step ST17, the indoor control board (C2) starts transmission of radio waves from the wireless power feeder (70).

In step ST18, the indoor control board (C2) determines whether or not the cumulative time of transmission of radio waves has reached a predetermined time. If it is determined that the cumulative time has reached the predetermined time ("YES" in step ST18), the power feeding action for that day is ended. If it is determined that the cumulative time has not reached the predetermined time ("NO" in step ST18), step ST11 is executed again while the first action is continued.

### -Control of Trial Operating Mode-

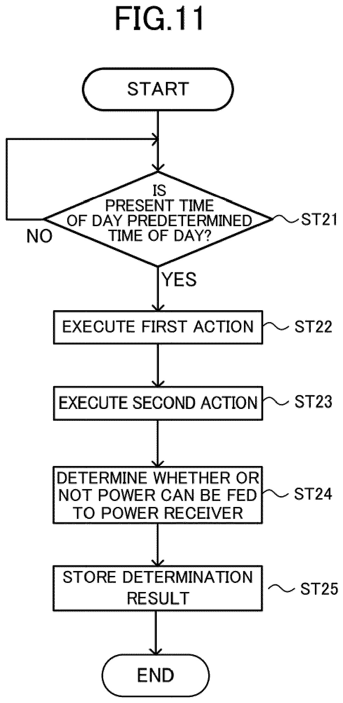

In the trial operating mode, the first and second actions are executed. The trial operating mode enables determination of whether or not power can be fed to the power receivers (R) and of the intensity of radio waves received by the power receivers (R). The trial operating mode is executed during a predetermined time zone. Examples of the predetermined time zone include night hours during which no person is present in the indoor space (S). Control of the trial operating mode will be described with reference to FIG. 11.

In step ST21, the indoor control board (C2) determines whether or not the present time is a predetermined time (at night). If the present time is the predetermined time ("YES" in step ST21), step ST22 is executed. If the present time is not the predetermined time ("NO" in step ST21), step ST21 is executed again.

In step ST22, the indoor control board (C2) orders the wireless power feeder (70) to execute the first action. Specifically, the wireless power feeder (70) transmits radio waves.

In step ST23, the indoor control board (C2) orders the first communication device (61) to execute the second action. Specifically, the first communication device (61) receives information transmitted from the power receivers (R) and relating to whether or not power can be received, in conjunction with the first action in step ST22.

In step ST24, the indoor control board (C2) determines whether or not power can be fed to each power receiver (R), based on the information acquired in step ST23 and relating to whether or not power can be received. If it is determined that power can be fed, the indoor control board (C2) further determines the intensity of radio waves to be received.

In step ST25, the indoor control board (C2) stores the result of the determination made in step ST24 for each power receiver (R).

### -Advantages of First Embodiment-

The air conditioning unit (U) of this embodiment includes the indoor air conditioner (40) configured to condition air in the indoor space (S), the power supply line (SL) configured to supply power to the indoor air conditioner (40), and the wireless power feeder (70) configured to feed power to the power receivers (R) disposed in the indoor space (S). The wireless power feeder (70) acquires power from the power supply line (SL).

The wireless power feeder (70) acquires power from the power supply line (SL). This can eliminate the need for laying a power cable that transmits power from the commercial power source directly to the wireless power feeder (70). The wireless power feeder (70) being disposed inside the indoor air conditioner (40) can omit the labor for installing the indoor air conditioner (40) and the wireless power feeder (70) separately, thereby decreasing the workload. In addition, the indoor air conditioner (40) that includes the wireless power feeder (70) can be provided.

The air conditioning unit (U) of this embodiment further includes the indoor control board (C2) (control board) configured to control the indoor air conditioner (40). The indoor control board (C2) controls the wireless power feeder (70). The indoor control board (C2) can control the timing of sending radio waves from the wireless power feeder (70), the intensity of the radio waves, and the like.

The air conditioning unit (U) of this embodiment includes the indoor control board (C2) (control unit (CU)) configured to control the intensity of radio waves transmitted from the wireless power feeder (70) to the power receivers (R) at three or more levels in accordance with the number of persons present in the indoor space (S). Fine control of the intensity of radio waves at three or more levels in accordance with the number of persons present in the indoor space (S) enables feeding of power to the power receivers (R) with consideration of the influence of radio waves on the human body in accordance with the number of persons present in the indoor space (S).

The air conditioning unit (U) of this embodiment includes the indoor control board (C2) (control unit (CU)) configured to control feeding of power from the wireless power feeder (70) to the power receivers (R) so that the index provided in consideration of the influence of radio waves on the human body is less than or equal to the predetermined value. Appropriate setting of the predetermined value enables sending radio waves with a radio wave intensity that less affects the human during power feeding.

The air conditioning unit (U) of this embodiment further includes the first communication device (61) (communication unit) configured to transmit and receive the predetermined information to and from the power receivers (R). Accordingly, the air conditioning unit (U) can receive information on whether or not power can be fed not only to the power receivers (R) but also from the power receivers (R).

In the air conditioning unit (U) of this embodiment, the first communication device (61) performs the second action to receive the information transmitted from the power receivers (R) and relating to whether or not power can be fed, in conjunction with the first action in which the air conditioning unit (U) feeds power to the power receivers (R).

The second action is performed in conjunction with the first action, thereby enabling a determination of whether or not power can be fed to the power receivers (R).

The air conditioning unit (U) of this embodiment includes the indoor control board (C2) (control unit (CU)) configured to execute the trial operating mode (first mode) in which the first and second actions are performed. This trial operating mode is executed, thereby enabling a determination of whether or not power can be fed to each power receiver (R) disposed in the indoor space (S) and of the degree of the intensity of radio waves received by the power receiver (R). According to this trial operating mode, it can be understood that, for example, if power cannot be fed to one of the power receivers (R), or if it is determined that the intensity of radio waves is low, the one of the power receivers (R) is relatively far from the air conditioning unit (U).

In the air conditioning unit (U) of this embodiment, the first action is an action in which the air conditioning unit (U) feeds power to the power receivers (R), and the indoor control board (C2) (control unit (CU)) orders an execution of the trial operating mode (first mode) during a predetermined time zone. For example, if the predetermined time zone is set to night hours during which no person is present in the indoor space (S), the first action can be performed with less influence of radio waves on the human body.

In the air conditioning unit (U) of this embodiment, the wireless power feeder (70) includes the antenna (71) (transmission member) configured to transmit power to the power receivers (R), and the transmission circuit (72) connected to the power supply line (SL) to output power to the antenna (71). The antenna (71) and the transmission circuit (72) are provided at different positions. Thus, the degree of flexibility in installation of the antenna (71) can be higher than if the antenna (71) and the transmission circuit (72) are integrated together.

In the air conditioning unit (U) of this embodiment, the indoor air conditioner (40) includes the casing (41) having the inlet (46), the outlets (47), and the air passage (48). The antenna (71) is disposed in the air passage (48). The antenna (71) is air-cooled by the air flowing through the air passage (48). Thus, the temperature of the antenna (71) that generates heat when sending radio waves can be less increased.

The air conditioning unit (U) of this embodiment further includes the bell mouth (51) disposed in the air passage (48). The antenna (71) is provided on the bell mouth (51). The antenna (71) disposed on the bell mouth (51) can be air-cooled.

In the air conditioning unit (U) of this embodiment, the antenna (71) is disposed on the upper surface (5 1c) (installation surface) of the bell mouth (51) in contact with the air passage (48), and has a shape conforming to the shape of the upper surface (51c). The antenna (71) has a flat arc shape conforming to the upper surface (51c) of the frame portion (51a) of the ring-shaped bell mouth (51). Thus, the antenna (71) is prevented from being an air flow resistance on the bell mouth (51).

In the air conditioning unit (U) of this embodiment, the antenna (71) includes the antenna element (71a) (body part) and the cover part (71b) that is hollow and made of resin. The antenna element (71a) is disposed in the cover part (71b). In this manner, the antenna element (71a) and the cover part (71b) can be integrated together.

### <First Variation of First Embodiment>

Atrial operating mode of this variation is different from that of the above embodiment. Specifically, in this variation, the indoor control board (C2) orders an execution of the trial operating mode (first mode) if no person is present in the indoor space (S).

Here, the situation "if no person is present in the indoor space (S)" may be, for example, the period during which the camera (R3) disposed in the indoor space (S) does not detect the presence of a person or may be the night hours during which no person enters the indoor space (S). Alternatively, the situation "if no person is present in the indoor space (S)" may be the period during which the alarm sensor (R1) does not detect the presence of a person in the indoor space (S).

In this manner, the trial operating mode of this variation is performed when no person is present in the indoor space (S), and thus the first action can be performed in consideration of the influence of radio waves sent from the wireless power feeder (70) on the human body.

### <Second Variation of First Embodiment>

Atrial operating mode of this variation is different from that of the above embodiment and the first variation. Specifically, the indoor control board (C2) orders an execution of the trial operating mode (first mode) in response to a manual operation.

Here, The "ordering an execution of the trial operating mode in response to a manual operation" means that, for example, a user uses the remote controller (C3) to send an instruction to the indoor control board (C2) to order the air conditioning unit (U) to execute the trial operating mode. Accordingly, the user can order the air conditioning unit (U) to execute the trial operating mode at an intended timing as needed.

### <Third Variation of First Embodiment>

An air conditioning unit (U) of this variation feeds power to power receivers (R) disposed in the indoor space (S) and a first indoor air conditioner (40a) disposed in the same indoor space (S).

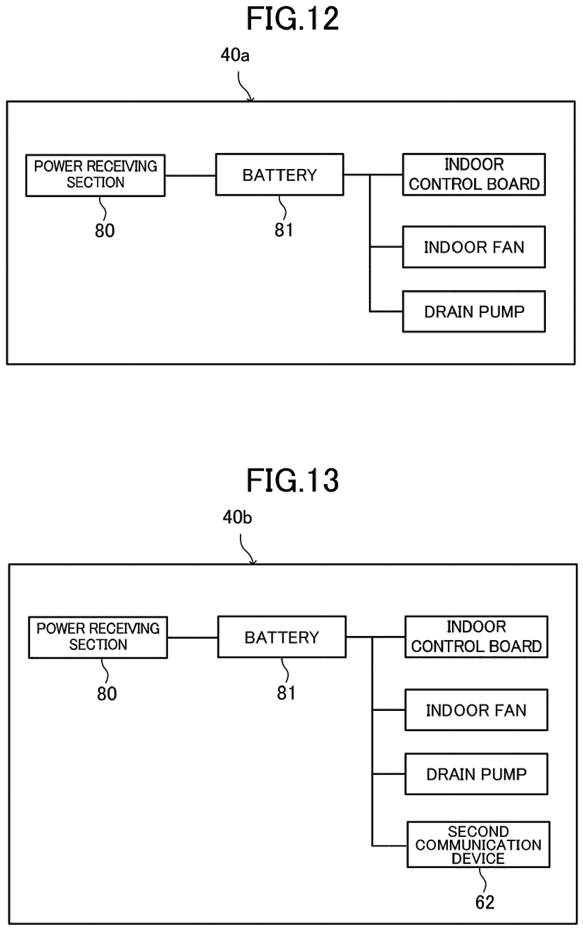

As shown in FIG. 12, the first indoor air conditioner (40a) is different from the indoor air conditioner (40) of the air conditioning unit (U). Specifically, the first indoor air conditioner (40a) is not connected to a wireless power feeder (70). In other words, the first indoor air conditioner (40a) is not provided with the wireless power feeder (70).

The first indoor air conditioner (40a) includes a power receiving section (80) configured to receive radio waves transmitted from the wireless power feeder (70), and a battery (81) configured to store electricity output from the power receiving section (80). The first indoor air conditioner (40a) may include a plurality of first indoor air conditioners (40a) disposed in the indoor space (S).

Accordingly, the wireless power feeder (70) of this variation can feed power to the first indoor air conditioner (40a). In addition, if the air conditioning unit (U) can provide power for the first indoor air conditioner (40a) without a commercial power source that supplies power, the labor for laying a power line connected to the first indoor air conditioner (40a) can be omitted. Consequently, the first indoor air conditioner (40a) can be relatively freely positioned without consideration of the position of the commercial power source.

### <Fourth Variation of First Embodiment>

An air conditioning unit (U) of this variation transmits and receives predetermined information from and to power receivers (R) disposed in the indoor space (S) and a second indoor air conditioner (40b) disposed in the same indoor space (S).

As shown in FIG. 13, the second indoor air conditioner (40b) is different from the indoor air conditioner (40) of the air conditioning unit (U). The second indoor air conditioner (40b) includes a second communication device (62) configured to transmit and receive predetermined information to and from the air conditioning unit (U).

A first communication device (61) of the air conditioning unit (U) of this variation transmits and receives the predetermined information to and from the second communication device (62) of the second indoor air conditioner (40b). The predetermined information includes information relating to devices included in the indoor air conditioner (40) and the second indoor air conditioner (40b), such as the number of rotations of the indoor fan (52), the air outlet temperature, the air inlet temperature, or the angle of each of flaps (57).

The first communication device (61) may transmit and receive the predetermined information to and from a specific one of the power receivers (R) disposed in the indoor space (S) via the second communication device (62) of the second indoor air conditioner (40b). Specifically, if the specific power receiver (R) is too distant from the first communication device (61) to transmit and receive information to and from the first communication device (61), and is so close to the second communication device (62) as to transmit and receive information to and from the second communication device (62), the first communication device (61) and the specific power receiver (R) can transmit and receive the predetermined information to and from each other using the second communication device (62) as a repeater. Accordingly, even if a power receiver (R) is relatively distant from the air conditioning unit (U), the first communication device (61) can transmit and receive the predetermined information to and from the power receiver (R).

### <Fifth Variation of First Embodiment>

In an air conditioning unit (U) of this variation, the first action in the trial operating mode is an action in which a first communication device (61) transmits a predetermined signal to power receivers (R). The power receivers (R) that have received the predetermined signal transmit, to the air conditioning unit (U), information relating to whether or not power can be fed.

Accordingly, in the trial operating mode of this variation, radio waves are not transmitted from a wireless power feeder (70) in the first action. This can keep the human body from being affected. As a result, the trial operating mode can be executed irrespective of the presence or absence of a person in the indoor space (S).

### <Sixth Variation of First Embodiment>

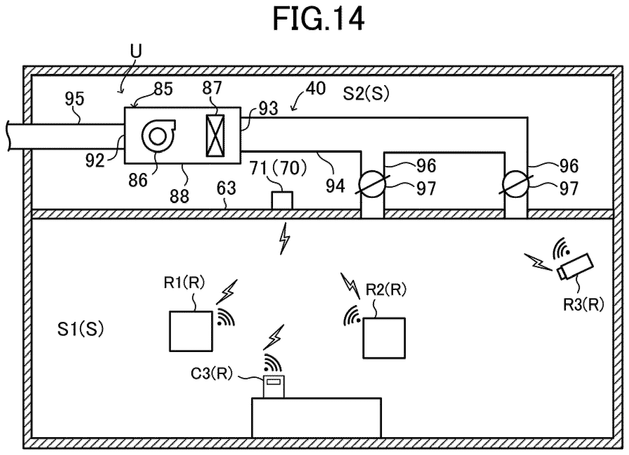

As illustrated in FIG. 14, an air conditioning unit (U) of this variation includes a variable air volume (VAV) control unit. Specifically, the air conditioning unit (U) of this variation includes an indoor air conditioner (40) having a duct air conditioning unit (85), a blow-out duct (94), a suction duct (95), and a wireless power feeder (70).

The duct air conditioning unit (85) is disposed in a second space (S2). The duct air conditioning unit (85) includes a unit casing (88), a fan (86), and a heat exchanger (87). The unit casing (88) has an air inlet (92) and an air outlet (93). The air inlet (92) is connected to one end of the suction duct (95).

The other end of the suction duct (95) communicates with an outdoor space. The air outlet (93) is connected to one end of the blow-out duct (94). The blow-out duct (94) is a duct (94) of the present disclosure. The blow-out duct (94) is connected to two branch ducts (96). The branch ducts (96) communicate with a first space (S1). Each of the branch ducts (96) is provided with an air conditioning damper (97) with a variable opening degree. The opening degree of the air conditioning damper (97) is adjusted to adjust the amount of air blown into the first space (S1). The air conditioning damper (97) is controlled by a controller (not shown).

The blow-out duct (94) is provided above the ceiling back surface (63) with a predetermined distance. The blow-out duct (94) is made of metal. The ceiling back surface (63) is made of resin. An antenna (71) of this variation is disposed at a position closer to the ceiling back surface (63) between a lower surface of the blow-out duct (94) and the ceiling back surface (63). Specifically, the antenna (71) is disposed on the ceiling back surface (63).

The fan (86) is operated, such that air in the suction duct (95) that has sucked outdoor air flows into the unit casing (88) through the air inlet (92). The air in the unit casing (88) is conditioned by the heat exchanger (87) and flows into the blow-out duct (94) through the air outlet (93). The flow rate of the air in the blow-out duct (94) is adjusted by the air conditioning dampers (97), and then the air is blown into the first space (S1).

In the air conditioning unit (U) of this variation, the antenna (71) is disposed on the ceiling back surface (63) made of resin, and thus the antenna (71) is less affected by heat generated by heating of the blow-out duct (94) made of metal.

### <<Second Embodiment>>

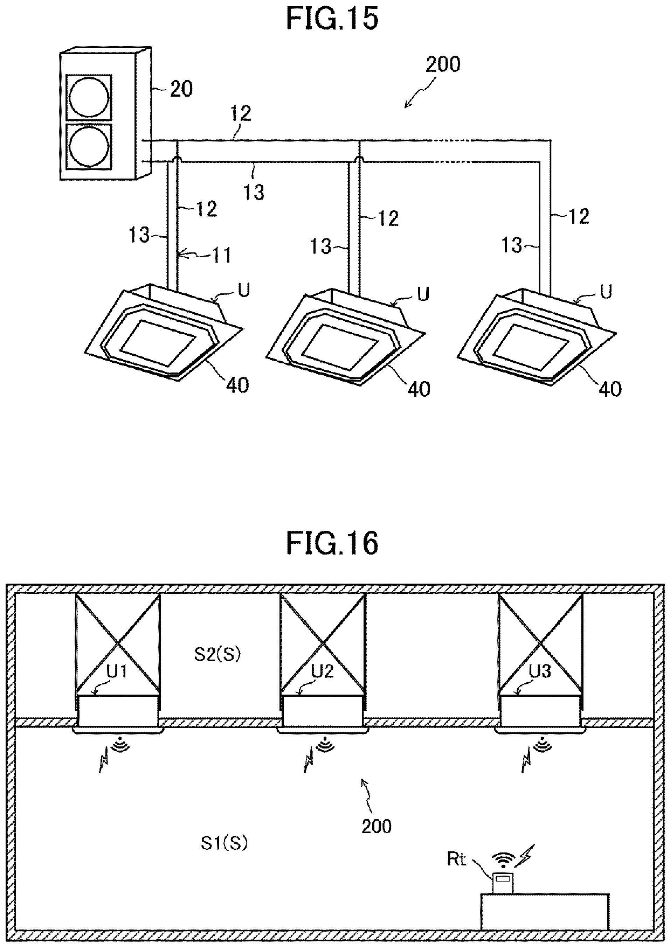

In a second embodiment, an air conditioning system (200) will be described. As illustrated in FIG. 15, the air conditioning system (200) includes one outdoor air conditioner (20) and a plurality of air conditioning units (U, U, ..., U). The air conditioning system (200) of this variation includes an air conditioning device (10) including the one outdoor air conditioner (20) and a plurality of indoor air conditioners (40, 40, ..., 40) connected together through a liquid connection pipe (12) and a gas connection pipe (13).

As illustrated in FIG. 16, the air conditioning system (200) of this variation includes the one outdoor air conditioner (20) and the three air conditioning units (a first air conditioning unit (U1), a second air conditioning unit (U2), and a third air conditioning unit (U3)). The three air conditioning units (U1, U2, U3) are arranged in the same indoor space (S). The indoor air conditioner (40) of each air conditioning unit (U) is provided with a wireless power feeder (70). Each of the wireless power feeders (70) is connected to a power supply line of the associated indoor air conditioner (40).

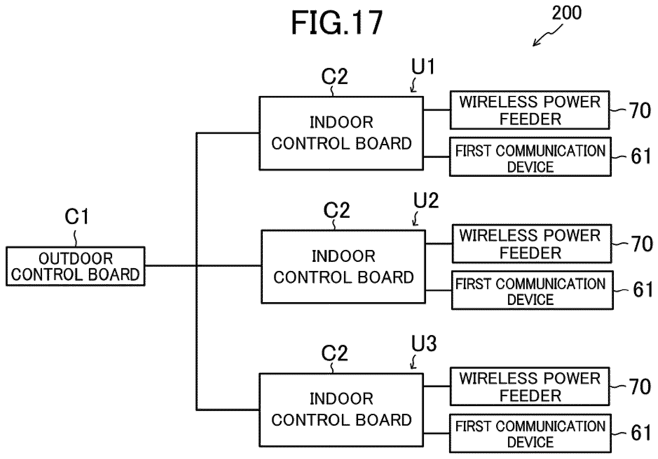

In the air conditioning system (200) of this example, an outdoor control board (C1) is a control device (C1) of the present disclosure. As shown in FIG. 17, the outdoor control board (C1) is connected to an indoor control board (C2) of each air conditioning unit (U) through a communication line.

The outdoor control board (C1) causes the three air conditioning units (U1, U2, U3) to perform the second action in conjunction with the first action for the power receivers (R). On the basis of information received from one of the power receivers (R) and relating to whether or not power can be fed, the outdoor control board (C1) determines near which one of the air conditioning units (U) the one of the power receivers (R) is located.

For example, if receiving radio waves from an air conditioning unit (U) in the first action, the power receiver (R) transmits information relating to the intensity of the received radio waves to the air conditioning unit (U). Specifically, if the intensity of the received radio waves is divided into three levels of "high," "medium," and "low," and the intensity of radio waves received from one of the air conditioning units (U) is "high," it is found that the power receiver (R) is located near the one of the air conditioning units (U). In contrast, if the intensity of radio waves received from one of the air conditioning units (U) is "low," it is found that the power receiver (R) is located relatively far from the one of the air conditioning units (U). In addition, if the outdoor control board (C1) has not acquired information relating to whether or not power can be fed from the power receiver (R) in conjunction with the first action, it is found that the power receiver (R) is broken, is deactivated, or has moved to the outside of the indoor space (S).

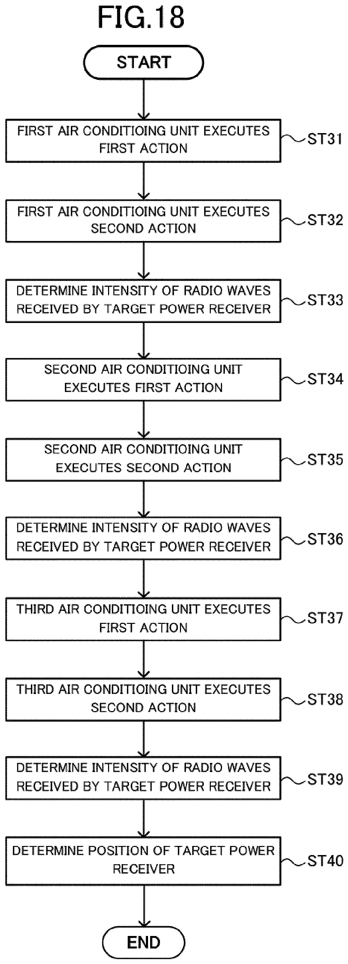

An example of control performed by the air conditioning system (200) of this variation will be described with reference to FIG. 18. A target one of the plurality of power receivers (R) is hereinafter referred to as the "target power receiver (Rt)."

In step ST31, the outdoor control board (C1) orders the first air conditioning unit (U1) to execute the first action.

In step ST32, the outdoor control board (C1) orders the first air conditioning unit (U1) to execute the second action.

In step ST33, the outdoor control board (C1) determines the intensity of the received radio waves based on the information acquired from the target power receiver (Rt) and relating to whether or not power can be fed. If the outdoor control board (C1) has not acquired the information relating to whether power can be fed, it is determined that the target power receiver (Rt) has not received radio waves from the first air conditioning unit (U1).

In step ST34, the outdoor control board (C1) orders the second air conditioning unit (U2) to execute the first action.

In step ST35, the outdoor control board (C1) orders the second air conditioning unit (U2) to execute the second action.

In step ST36, the outdoor control board (C1) determines the intensity of the received radio waves based on the information acquired from the target power receiver (Rt) and relating to whether or not power can be fed. If the outdoor control board (C1) has not acquired the information relating to whether power can be fed, it is determined that the target power receiver (Rt) has not received radio waves from the second air conditioning unit (U2).

In step ST37, the outdoor control board (C1) orders the third air conditioning unit (U3) to execute the first action.

In step ST38, the outdoor control board (C1) orders the third air conditioning unit (U3) to execute the second action.

In step ST39, the outdoor control board (C1) determines the intensity of the received radio waves based on the information acquired from the target power receiver (Rt) and relating to whether or not power can be fed. If the outdoor control board (C1) has not acquired the information relating to whether power can be fed, it is determined that the target power receiver (Rt) has not received radio waves from the third air conditioning unit (U3).

In step ST40, the outdoor control board (C1) determines near which unit (U) of the first to third air conditioning units (U1 to U3) the target power receiver (Rt) is located, based on the determination results in steps ST33, ST36, and ST39. For example, if the intensity of the received radio waves sent by the first and second air conditioning units (U1) and (U2) is "low," and the intensity of the received radio waves sent by the third air conditioning unit (U3) is "high," it is determined that the target power receiver (Rt) is located near the third air conditioning unit (U3).

According to the air conditioning system (200) of this example, if each of the plurality of power receivers (R, R, ..., R) disposed in the first space (S1) is set to be the target power receiver (Rt), it can be found near which one of the air conditioning units (U) each power receiver (R) is located.

In addition, if the outdoor control board (C1) has not acquired information relating to whether or not power can be fed from the target power receiver (Rt), it can be found that the target power receiver (Rt) is broken, or is not present in the indoor space (S).

In addition, if a power receiver (R) is a mobile unit, the position to which the power receiver (R) has moved can be found by regularly performing the above determination.

### <<Other Embodiments>>

The above embodiments may be modified as follows.

The antenna (71) may be provided on the drain pan (54). The drain pan (54) is disposed in a relatively large space, and thus the antenna (71) can be installed in a relatively easy way. Such an installation in a relatively large space can lead to less increase in the temperature of the antenna (71) due to heat dissipation.

The antenna (71) may be provided on one of the supports (27) (see FIG. 4). The supports (27) are provided outside the casing (41). Thus, the installation of the antenna (71) at that position can lead to less increase in the temperature of the antenna (71) due to heat dissipation.

The antenna (71) may be provided on one of the hanging tools (90) provided in the second space (S2) or on one of the coupling members (91) (see FIG. 1) coupling the hanging tools (90) together.

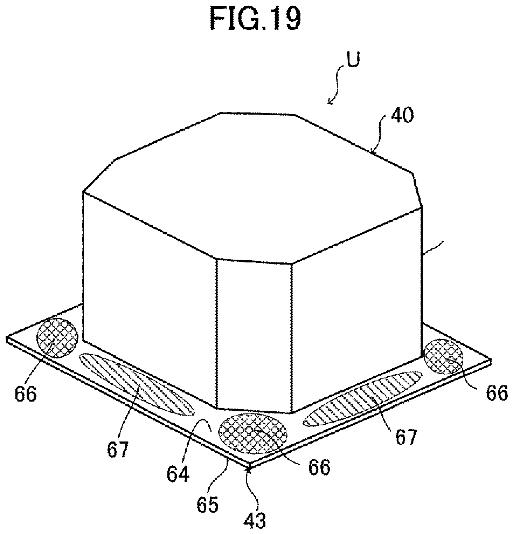

The antenna (71) may be disposed on the decorative panel (43). As illustrated in FIG. 19, the antenna (71) may be provided on an outer peripheral portion (68) of the first surface (64), which is the surface of the decorative panel (43) facing the ceiling cavity. Specifically, the antenna (71) is disposed on one of corner portions (66) (the shaded portions in FIG. 19) each surrounded by two adjacent ones of the sides of the outer peripheral portion (68) of the first surface (64). The casing body (42) has an octagonal shape as viewed from above. Thus, the corner portions (66) can reliably provide a relatively large installation space. Thus, the antenna (71) and the transmission circuit (72) integrated together can be disposed on the corner portions (66). As a result, a wire that connects the antenna (71) and the transmission circuit (72) together can be shortened, and thus the power loss from the transmission circuit (72) to the antenna (71) can be reduced. The antenna (71) may not be in contact with the corner portions (66), and may be disposed above this corner portion (66). The antenna (71) of this variation may be disposed on a straight portion (67) (the hatched portions in FIG. 19) where the straight portion (67) is along any one of the four sides of the outer peripheral portion (68) of the first surface (64) of the decorative panel (43).

The antenna (71) may be provided on the second surface (65), which is the surface of the decorative panel (43) facing the indoor space. The installation at that position enables relatively easy maintenance of the antenna (71).

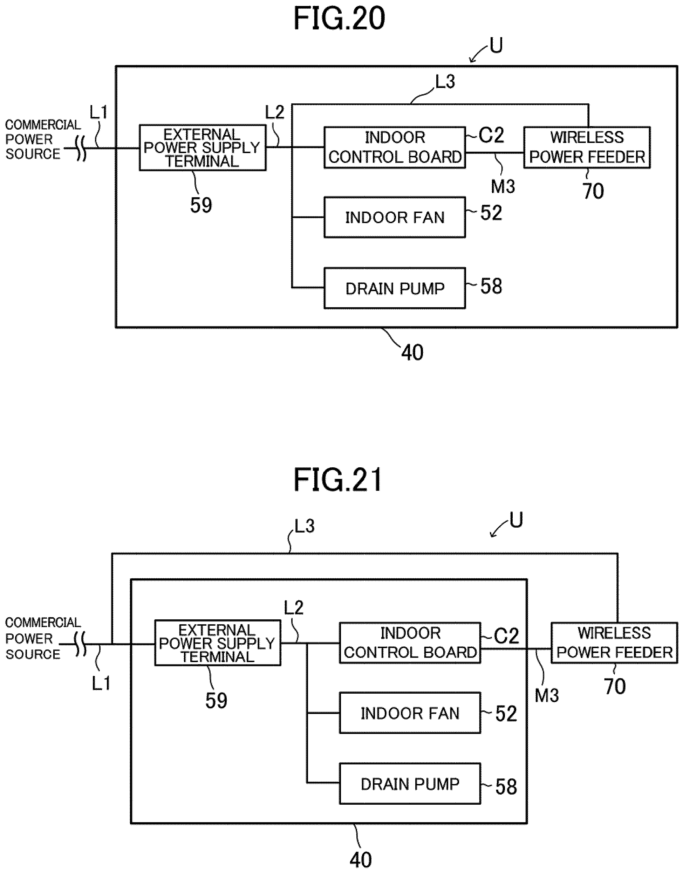

The wireless power feeder (70) only has to be connected to the power supply line (SL). For example, as shown in FIG. 20, the third power line (L3) connected to the wireless power feeder (70) may be connected to the second power line (L2). As shown in FIG. 21, if the wireless power feeder (70) is disposed outside the indoor air conditioner (40), the third power line (L3) may be connected to the first power line (L1).

The power line (third power line (L3)) and the communication line (third communication line (M3)) that connect the wireless power feeder (70) and the indoor control board (C2) together may form the same wire.

The wireless power feeder (70) may not be connected to, and may be wirelessly connected to the indoor control board (C2) and the third communication line (M3).

The outdoor control board (C1) may be a control board (CB) of the present disclosure. The outdoor control board (C1) may be a control unit (CU) of the present disclosure. The outdoor control board (C1) may transmit and receive predetermined information to and from the first communication device (61). In this case, the predetermined information transmitted from the power receivers (R) is received by the first communication device (61), and then is transmitted to the outdoor control board (C1). At this time, the first communication line that connects the indoor air conditioner (40) and the outdoor air conditioner (20) together may be used to establish communication between the first communication device (61) and the outdoor control board (C1). The outdoor control board (C1) may control the wireless power feeder (70) via the communication line based on the predetermined information received from the first communication device (61).

The remote controller (C3) may include the control board (CB) of the present disclosure. The remote controller (C3) may be the control unit (CU) of the present disclosure.

The wireless power feeder (70) may include the control board (CB) of the present disclosure. The wireless power feeder (70) may include the control unit (CU) of the present disclosure.

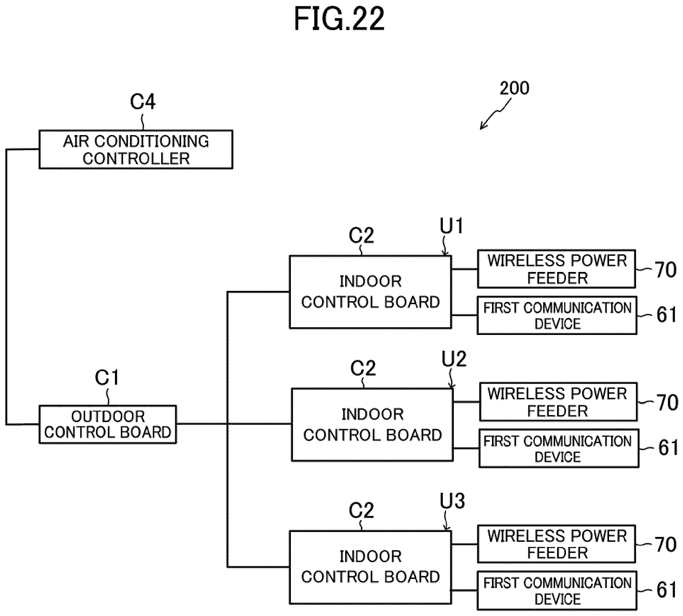

As shown in FIG. 22, the air conditioning system (200) may include an air conditioning controller (C4). The air conditioning controller (C4) controls operation of the entire air conditioning device (10) to control operation of an indoor air conditioner (40) provided in each of rooms of a building, for example. The air conditioning controller (C4) is provided in an administration office or the like in the building where the air conditioning device (10) is provided. The air conditioning controller (C4) may be provided in a roofed and walled structure outside the building. In this case, the air conditioning controller (C4) remotely controls the air conditioning device (10) in the building via an external network.

The air conditioning controller (C4) includes a microcomputer and a memory device that stores software for operating the microcomputer. In the example shown in FIG. 22, the air conditioning controller (C4) is connected to an outdoor control board (C1) through a communication line. Thus, first communication devices (61) transmit and receive predetermined information to and from the air conditioning controller (C4). In this case, the predetermined information transmitted from power receivers (R) is received by the air conditioning controller (C4) via indoor control boards (C2) and the outdoor control board (C1). Thereafter, the air conditioning controller (C4) controls wireless power feeders (70) via the communication line based on the received predetermined information. The air conditioning controller (C4) may transmit and receive predetermined information directly to and from the first communication device (61).

The air conditioning controller (C4) may be connected to the indoor control boards (C2) through communication lines. The air conditioning controller (C4) may control the wireless power feeders (70). In other words, the air conditioning controller (C4) may be an example of the control unit (CU) of the present disclosure. The air conditioning controller (C4) may be the control unit (CU) of the present disclosure.

In each of the above embodiments and variations, if a construction (such as a building) with the air conditioning device (10) is provided with a management system such as a building energy management system (BEMS) that manages energy in the building, the first communication devices (61) may transmit and receive predetermined information to and from the management system. In this case, the predetermined information transmitted from the power receivers (R) is received by the management system. The management system may control the wireless power feeders (70) via the communication lines based on the received predetermined information.

In the first embodiment, the intensity of radio waves sent from the wireless power feeder (70) only has to be controlled at three or more levels. Controlling the intensity of radio waves at multiple levels enables fine adjustment of the intensity of radio waves. Thus, the intensity of radio waves can be finely controlled in accordance with the number of persons in the indoor space (S). The intensity of radio waves may be adjusted based on the number of persons present in the indoor space (S) per unit time. The intensity of radio waves may be adjusted based on the intensity of radio waves received by the power receivers (R). The intensity of radio waves sent from the wireless power feeder (70) may be controlled in the trial operating mode.

The trial operating mode of the first embodiment may be regularly performed. This enables regular acquisition of information on whether or not power can be fed to each power receiver (R). If a power receiver (R) does not receive power during the time zone during which the trial operating mode is executed, the power receiver (R) may transmit information indicating that it has not received power to the air conditioning unit (U). The air conditioning unit (U) that has received the information can identify the power receiver (R) that has not received power.

The information on whether or not power can be fed may include information indicating that power cannot be fed to a power receiver (R). The information on whether or not power can be fed may include the remaining battery power in each power receiver (R).

In the third variation of the first embodiment, the air conditioning unit (U) may be capable of transmitting and receiving predetermined information to and from the first indoor air conditioner (40a) in a wired or wireless manner.

In the fourth variation of the first embodiment, the air conditioning unit (U) may be capable of wirelessly feeding power to the second indoor air conditioner (40b).

The indoor air conditioner (40) of the first embodiment may be a fan coil unit air conditioner including a hot and chilled water coil.

The indoor air conditioner (40) of the sixth variation of the first embodiment may include a variable refrigerant volume system (a so-called VRV system).

The first action of the second embodiment may be an action in which the air conditioning unit (U) feeds power to the power receivers (R), or an action in which the air conditioning unit (U) outputs a predetermined signal. If the first action is an action in which power is fed to the power receivers (R), an action for determination should be performed in one preferred embodiment when no person is present in the first space (S1), e.g., at night, in consideration of the influence of radio waves on a person. If the first action is an action in which the predetermined signal is transmitted, an action for determination may be performed when a person or persons are present in the first space (S1).

In the second embodiment, the air conditioning system (200) only has to include two or more air conditioning units (U). The plurality of air conditioning units (U) may not be disposed in the same indoor space (S), and may be disposed in a plurality of indoor spaces (S).

In the second embodiment, the control device (C2, C3) of the present disclosure may be the indoor control board (C2) or may be the remote controller (C3). The control device (C4) of the present disclosure may be the air conditioning controller (C4). Alternatively, the control device (C1, C2, C3, C4) of the present disclosure may be a device configured to be separate from the indoor air conditioner (40) and the outdoor air conditioner (20).

While the embodiments and variations thereof have been described above, it will be understood that various changes in form and details may be made without departing from the spirit and scope of the claims. The foregoing embodiments and variations thereof may be combined and replaced with each other without deteriorating the intended functions of the present disclosure. The expressions of "first," "second," ... described above are used to distinguish the terms to which these expressions are given, and do not limit the number and order of the terms.

### INDUSTRIAL APPLICABILITY

As can be seen from the foregoing description, the present disclosure is useful for an air conditioning unit and an air conditioning system.

### DESCRIPTION OF REFERENCE CHARACTERS

- S: Indoor Space (Target Space)
- C1: Outdoor Control Board (Control Device)
- C2: Indoor Control Board (Control Device)
- C3: Remote Controller (Control Device)
- C4: Air Conditioning Controller (Control Device)
- CB: Control Board
- CU: Control Unit
- 27: Support
- 40: Indoor Air Conditioner
- 40a: First Indoor Air Conditioner
- 40b: Second Indoor Air Conditioner
- 41: Casing
- 43: Decorative Panel
- 46: Inlet
- 47: Outlet
- 48: Air Passage
- 51: Bell Mouth
- 51c: Upper Surface (Installation Surface)
- 53: Heat Exchanger
- 54: Drain Pan
- 61: First Communication Device (Communication Unit)
- 63a: Opening
- 64: First Surface
- 65: Second Surface
- 66: Corner Portion
- 67: Straight Portion
- 68: Outer Peripheral Portion
- 70: Wireless Power Feeder
- 71: Antenna (Transmission Member)
- 71a: Antenna Element (Body Part)
- 71b: Cover Part
- 72: Transmission Circuit
- 94: Blow-out Duct (Duct)

## Claims

1. An air conditioning unit comprising:
an indoor air conditioner (40) configured to condition air in a target space (S);
a power supply line (SL) configured to supply power to the indoor air conditioner (40); and
a wireless power feeder (70) configured to feed power to a predetermined device (R) disposed in the target space (S),
the wireless power feeder (70) acquiring power from the power supply line (SL).

2. The air conditioning unit of claim 1 further comprising:
a control board (CB) configured to control the indoor air conditioner (40), wherein
the control board (CB) controls the wireless power feeder (70).

3. The air conditioning unit of claim 1 or 2 further comprising:
a control unit (CU) configured to control an intensity of radio waves sent from the wireless power feeder (70) to the device (R) at three or more levels in accordance with the number of persons present in the target space (S).

4. The air conditioning unit of claim 1 or 2 further comprising:
a control unit (CU) configured to control feeding of power from the wireless power feeder (70) to the device (R) so that an index provided in consideration of influence of radio waves on a human body is less than or equal to a predetermined value.

5. The air conditioning unit of claim 1 or 2, wherein
the device (R) is a first indoor air conditioner (40a) different from the indoor air conditioner (40), and
the wireless power feeder (70) feeds power to the first indoor air conditioner (40a).

6. The air conditioning unit of claim 1 further comprising:
a communication unit (61) configured to transmit and receive predetermined information to and from the device (R).

7. The air conditioning unit of claim 6, wherein
the communication unit (61) transmits and receives the predetermined information to and from a second indoor air conditioner (40b) different from the indoor air conditioner (40).

8. The air conditioning unit of claim 6, wherein
the communication unit (61) transmits and receives the predetermined information to and from an outdoor air conditioner (20), an air conditioning controller (C4) configured to control an air conditioning device (10) including the outdoor air conditioner (20) and the indoor air conditioner (40), or a management system configured to manage energy in a construction with the air conditioning device (10).

9. The air conditioning unit of any one of claims 6 to 8, wherein
the communication unit (61) performs a second action in which information transmitted from the device (R) and relating to whether or not power can be fed is received in conjunction with a first action in which the air conditioning unit (U) feeds power to the device (R) or outputs a predetermined signal.

10. The air conditioning unit of claim 9 further comprising:
a control unit (CU) configured to order an execution of a first mode in which the first and second actions are performed.

11. The air conditioning unit of claim 10, wherein
the first action is an action in which the air conditioning unit (U) feeds power to the device (R), and
the control unit (CU) orders an execution of the first mode during a predetermined time zone.

12. The air conditioning unit of claim 10, wherein
the first action is an action in which the air conditioning unit (U) feeds power to the device (R), and
the control unit (CU) orders an execution of the first mode when no person is present in the target space (S).

13. The air conditioning unit of claim 10, wherein
the first action is an action in which the air conditioning unit (U) feeds power to the device (R), and
the control unit (CU) orders an execution of the first mode in accordance with a manual operation.

14. The air conditioning unit of claim 1, wherein
the wireless power feeder (70) includes:
a transmission member (71) configured to transmit power to the device (R); and
a transmission circuit (72) connected to the power supply line (SL) to output power to the transmission member (71), and
the transmission member (71) and the transmission circuit (72) are provided at different positions.

15. The air conditioning unit of claim 14, wherein
the indoor air conditioner (40) includes an inlet (46), an outlet (47), and a casing (41) having an air passage (48) through which air is transported from the inlet (46) to the outlet (47), and
the transmission member (71) is disposed in the air passage (48).

16. The air conditioning unit of claim 15 further comprising:
a bell mouth (51) disposed in the air passage (48),
wherein
the transmission member (71) is provided on the bell mouth (51).

17. The air conditioning unit of claim 16, wherein
the transmission member (71) is disposed on an installation surface (51c) of the bell mouth (51) in contact with the air passage (48), and has a shape conforming to a shape of the installation surface (51c).

18. The air conditioning unit of claim 15 further comprising:
a heat exchanger (53) disposed in the air passage (48) to exchange heat between air in the air passage (48) and a heating medium; and
a drain pan (54) configured to collect drain water deposited on the heat exchanger (53), wherein
the transmission member (71) is provided on the drain pan (54).

19. The air conditioning unit of claim 15 further comprising:
a support (27) configured to support the casing (41) on a structure of a construction, wherein
the transmission member (71) is provided on the support (27).

20. The air conditioning unit of claim 15, wherein
the casing (41) is disposed at an opening (63a) in a ceiling of the target space (S),
the air conditioning unit further includes a decorative panel (43) provided on a lower surface of the casing (41) to cover the opening (63a), and
the transmission member (71) is disposed on the decorative panel (43).

21. The air conditioning unit of claim 20, wherein
if a surface of the decorative panel (43) facing a ceiling cavity is defined as a first surface (64),
the transmission member (71) is provided on an outer peripheral portion (68) of the first surface (64).

22. The air conditioning unit of claim 21, wherein
the decorative panel (43) is rectangular, and
the transmission member (71) is disposed on one of corner portions (66) of the outer peripheral portion (68) of the first surface (64), each corner portion (66) being surrounded by two adjacent ones of sides of the outer peripheral portion (68).

23. The air conditioning unit of claim 21, wherein
the decorative panel (43) is rectangular, and
the transmission member (71) is disposed on a straight portion (67) of the outer peripheral portion (68) of the first surface (64) where the straight portion (67) is along any one of four sides of the outer peripheral portion (68).

24. The air conditioning unit of claim 20, wherein
if a surface of the decorative panel (43) facing the target space (S) is defined as a second surface (65),
the transmission member (71) is provided on the second surface (65).

25. The air conditioning unit of claim 14, wherein
the indoor air conditioner (40) further includes a duct (94) disposed behind a ceiling of the target space (S), and
the transmission member (71) is located closer to a ceiling back surface between the ceiling back surface and the duct (94).

26. The air conditioning unit of any one of claims 14 to 25, wherein
the transmission member (71) includes a body part (71a) and a cover part (71b) that is hollow and made of resin, and
the body part (71a) is disposed inside the cover part (71b).

27. An air conditioning system comprising:
the air conditioning unit of claim 9 including a plurality of air conditioning units disposed in the target space (S); and
a control device (C1, C2, C3, C4) configured so that the plurality of air conditioning units each perform the second action in conjunction with the first action for the device (R) such that the control device (C 1, C2, C3, C4) determines near which one of the air conditioning units the device (R) is located.
